# EUROPÄISCHE PATENTANMELDUNG

(11) **EP 1 892 979 A1**
(43) Veröffentlichungstag der Anmeldung: **27.02.2008**
(21) Anmeldenummer: 06017576.7
(22) Anmeldetag: 23.08.2006
(51) Int. Cl.: H04Q 7/38

(54) **Interaktive Dienstauswahl bei einem Mobile Terminating Call ohne ausreichende Compatibility Information**

(71) Anmelder: Nokia Siemens Networks GmbH & Co. KG, 81541 München (DE)
(72) Erfinder: Wopkes, Marco, 85748 Garching b. München (DE); Zaus, Robert Dr., 80686 München (DE)

(57) **Zusammenfassung**

Die Erfindung betrifft Vorrichtungen und Verfahren zur Dienstauswahl beim Rufaufbau für einen Anruf für ein Endgerät (Mobile Terminating Call) über ein Telekommunikationsnetz, insbesondere über ein zellulares Mobilfunknetz, dadurch gekenzeichnet, dass wenn ein Endgerät (UE) im Falle eines Anrufs (Mobile Terminating Call) eine Rufaufbau- (Setup) Nachricht ohne Kompatibilitäts- Information (Compatibility Information BC) erhält, vom Endgerät (UE) nach Empfang der Rufaufbau- (Setup) Nachricht und vor dem Senden einer Anrufbestätigungsnachricht (Call Confirmed) ein Auswahlmenü erzeugt wird, mit dem vom Benutzer eine Auswahl eines Dienstes abgefragt wird ("Video Call" oder "Voice Call"),
worauf vom Endgerät (UE) unter Berücksichtigung der Auswahl eine Kompatibilitäts- Information (Compatibility Information) in einer Anrufbestätigungsnachricht (Call Confirmed) an das Telekommunikationsnetz gesendet wird.

## Beschreibung

Die Erfindung betrifft Vorrichtungen und Verfahren zur Dienstauswahl beim Rufaufbau für einen zu einem Endgerät hin aufzubauenden Anruf (Mobile Terminating Call).

Wenn zu einem Mobilfunkteilnehmer in einem zellularen Mobilfunknetz (PLMN2) ein Anruf ("Call") aufgebaut wird, kann es vorkommen, dass im zellularen Mobilfunknetz (PLMN2) keine Information darüber vorliegt, ob es sich um einen Sprachverbindungs- Anruf (Voice Call) oder Datenverbindungs-Anruf (Daten Call) wie z.B. einen Videoverbindungsanruf (Video Call), handelt.
Dies kommt regelmäßig dann vor,
- wenn im PLMN2 bei der Vergabe der Rufnummern ein Einzelrufnummernschema (="single numbering scheme") verwendet wird (siehe 3GPP TS 29.007: der Teilnehmer hat dabei nur eine einzige MSISDN-Nummer, die für alle Dienste verwendet wird; im Gegensatz dazu erhält der Teilnehmer beim Multirufnummernschema ("multi-numbering scheme") für die verschiedenen Dienste unterschiedliche Rufnummern) und
- mit der Signalisierung keine hinreichende Kompatibilitäts-Information ("Compatibility Information") wie z.B. eine "ISDN-Bearer Capability" Information (BC), "High Layer Compatibility Information" (HLC) oder "Low Layer Compatibility" Information (LLC)) mitgeliefert wird, z.B. wenn der Anruf ("Call") von einem PSTN-Telekommunikations- Festnetz aus aufgebaut wurde oder von einem zellularen Mobilfunknetz (PLMN1) aus aufgebaut und dann jedoch durch ein Festnetz PSTN geroutet wurde.

In diesem Fall wird der Call im PLMN2 als Mobile Terminated Call weiter aufgebaut, indem die Vermittlungseinrichtung (z.B. MSC/VLR), in der der Call terminiert, eine Rufaufbaunachricht ("Setup Nachricht") ohne Kompatibilitäts-Information (PLMN-BC Information Element) zum Teilnehmer-Endgerät (User Equipment UE) sendet. In der Antwortnachricht ("Call Confirmed") vom Endgerät (UE) zur Vermittlungseinrichtung (MSC/VLR) ist dann ein PLMN-BC Information Element enthalten. Die MSC/VLR kann nun das PLMN-BC Element auswerten und den für den Dienst geeigneten Funkkanal zuweisen. (Für bestimmte Dienste, z.B. "Analoger Video Call mit Fallback to Speech" kann das UE auch 2 PLMN-BC Information Elemente mit der Call Confirmed Nachricht mitsenden.)

Wenn der Dienst, der von dem UE in PLMN2 ausgewählt wurde, nicht mit dem Dienst übereinstimmt, den der Anrufer auf seiner Seite mit dem Netz ausgehandelt hat, wird die Verbindung zwar Ende-zu- Ende aufgebaut, kann aber nicht zur Kommunikation genutzt werden.

Ein Problem liegt nun in der Frage wie das UE bei diesem Ablauf wissen kann, welches Kompatibilitäts- Informations-Element (z.B. BC Element) es in der "Call Confirmed" (="Rufaufbau bestätigt") Nachricht an das Netz senden muss. Im 3GPP Standard ist dies z.B. nicht spezifiziert, eine Idee wäre, dass der A- und der B- Teilnehmer vorher z.B. in einem Telefongespräch Abmachungen treffen und dann für den nächsten Anruf (Call) ihr Endgerät UE entsprechend konfigurieren. Das ist sehr umständlich und kompliziert, da wahrscheinlich nicht jeder weiß, in welchem Menü im UE dies zu konfigurieren ist.

Im Release 5 des 3GPP Standards hat das Netz auch die Möglichkeit, mit der Setup Nachricht wenigstens eine Teilinformation über den gewünschten Dienst an das UE zu übertragen (z.B., soweit bekannt, die vom Anrufer gewünschte Datenrate; siehe 3GPP TS 24.008, Backup Bearer Capability IE), wenn die Signalisierungsinformation in PLMN2 nicht ausreicht, um den Dienst und das PLMN-BC daraus eindeutig abzuleiten. Auch diese Information reicht aber im UE in der Regel nicht aus, um den Dienst und damit das PLMN-BC für die Antwort an das Netz eindeutig zu ermitteln.

Aufgabe der Erfindung ist es, möglichst effizient eine ergonomische Rufaufbausignalisierung für unterschiedliche Dienste wie insbesondere Sprachverbindung und Videoverbindung zu ermöglichen. Die Aufgabe wird jeweils durch die Erfindung gemäß den Patentansprüchen gelöst.

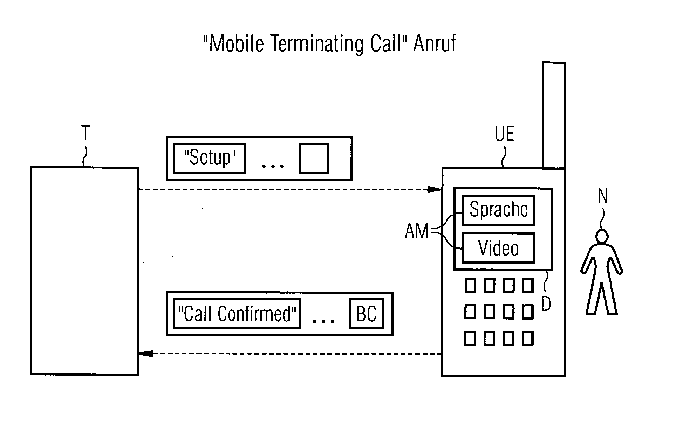

Dies ist im Prinzip folgendermaßen möglich wie Figur 1 als einzige Figur zeigt (bekannte Elemente eines Telekommunikationsnetzes und der Rufaufbausignalisierung werden zur Verbesserung der Verständlichkeit nicht dargestellt):
- Wenn ein Endgerät UE im Fall eines Mobile Terminated Calls eine "Setup" Nachricht ohne "BC" Element erhält, soll das UE schon beim Empfang der "Setup" Nachricht ein Signal (z.B. Klingelsignal) zur Benachrichtigung des Benutzers initiieren. Im Normalfall würde das Endgerät UE erst nach dem Senden der "Call Confirmed" Nachricht einen Klingelton generieren, wenn also bereits das "BC" Informations- Element zu einer MSC/VLR des Telekommunikationsnetzes T zurückgesendet ist. Nach dem Klingelton soll ein Auswahlmenü AM auf dem Display D des Endgerätes UE erscheinen, in dem der Subscriber den erwarteten Dienst auswählen kann (z.B. Video Call oder Sprache = Voice Call). Diese Information wird vom Endgerät UE in eine zu übermittelnde Information (z.B. "BC" Information) umgesetzt und entsprechend in der "Call Confirmed" Nachricht an das Netz gesendet. Damit wird es dem Endgerät-Nutzer (=Subscriber/Teilnehmer) erspart, sein Endgerät UE vor dem Empfang eines Anrufs (Calls) umkonfigurieren zu müssen.

Wenn der Endgerät-Nutzer (Subscriber/Teilnehmer) N keine Auswahl trifft, soll nach einem kurzen Zeitraum für das "BC" Element ein voreingestellter Standardwert für den weiteren Call Aufbau verwendet werden.

Der Klingelton muss nicht der normale Klingelton des Subscribers sein, sondern könnte z.B. ein kurzes Piepen sein. Die Art des Klingeltons könnte auch vom Netz durch ein Informations- Element in der Setup Nachricht beeinflusst werden.

Die Funktion sollte im Endgerät UE ausschaltbar sein. Für Subscriber, die sehr viele Calls ohne BC Information erhalten und immer nur "Voice" als Anrufart (Call Typ) benötigen, kann das Endgerät UE so eingerichtet werden, dass immer die entsprechende "Voice BC" Information zurückgesendet wird. Wenn ein Subscriber hauptsächlich Videocalls erwartet, soll als Standardwert "Video Call" einrichtbar sein. Für andere Dienste kann es analog gemacht werden.

Wenn das Netz mit der Rufaufbau- Nachricht ("Setup" Nachricht) anstelle einer PLMN-BC Information eine "Backup Bearer Capability" Information gemäß TS 24.008 mitsendet, kann das Endgerät UE die darin enthaltene Information verwenden, um Dienste, die damit nicht vereinbar sind, dem Subscriber im Auswahlmenü gar nicht mehr anzubieten.

In einer zweiten Variante der Erfindung sendet das Endgerät UE mit der "Call Confirmed" Nachricht keine PLMN-BC Information an das Netz zurück, sondern sendet eine 'leere' "Call Confirmed" Nachricht und gleich anschließend eine "Alert"-Nachricht (Alarmnachricht). Das Endgerät UE weiß dabei aufgrund eines in der Setup Nachricht enthaltenen neuen Informations- Elements, dass die MSC/VLR diese Signalisierung ("Call Confirmed" Nachricht ohne "BC" Element als Antwort auf eine "Setup" Nachricht ohne "BC"- Element) unterstützt. Wie in der ersten Variante der Erfindung wird ein Klingelton generiert und dem angerufenen Subscriber ein Menü zur Auswahl des Dienstes angeboten. Nach der Auswahl des Dienstes wird das entsprechende BC Element vom UE mit der Connect Nachricht an die MSC/VLR gesendet, die dann einen entsprechenden Funkkanal zuweist und den Call durchschaltet. (Für bestimmte Dienste, z.B. "Analoger Video Call mit Fallback to Speech" kann das UE auch 2 PLMN-BC Information Elemente mit der Connect Nachricht mitsenden.)

Vorteil der zweiten gegenüber der ersten Variante ist, dass der MSC/VLR mit der Alert Nachricht zum richtigen Zeitpunkt signalisiert wird, dass beim angerufenen Teilnehmer ein Klingelton anliegt. Dadurch kann die MSC/VLR auch den Anrufer zeitgerecht informieren, dass beim angerufenen Teilnehmer ein Klingelton anliegt. Vorteil der ersten Variante ist demgegenüber, dass die Signalisierung zwischen MSC/VLR und UE gegenüber dem jetzigen Stand des 3GPP Standards nicht geändert werden muß, wenn darauf verzichtet wird, die Art des anzulegenden Klingeltons von der MSC/VLR zum UE zu signalisieren. Insbesondere sind dann keine Änderungen in der MSC/VLR notwendig.

Ein Vorteil der Erfindung liegt darin, dass das Endgerät UE zu einem so frühen Zeitpunkt "klingelt", dass es zu diesem Zeitpunkt die Aushandlung des Dienstes mit dem Netz noch nicht abgeschlossen hat und der Subscriber deshalb während des Call Aufbaus interaktiv die Art des Dienstes (= zurücksignalisiertes BC Element) beeinflussen kann, sowie darin, dass das UE nach einer gewissen Zeit selbst einen Standard BC Wert an das Netz schickt.

Außerdem ist vorteilhaft an der Erfindung, dass das UE dem Subscriber ein Menü anbietet, aus dem der Subscriber den Dienst auswählen kann.

In einer ersten Variante der Erfindung kann der Subscriber dadurch in die Auswahl des Dienstes eingreifen, dass er vom UE zu einem früheren Zeitpunkt über den ankommenden Call informiert wird, als bisher im Standard vorgesehen.

In einer zweiten Variante der Erfindung wird dies dadurch erreicht, dass das BC Element erst zu einem späteren Zeitpunkt, mit einer anderen Nachricht ("Connect") zum Netz zurückgesendet wird, als bisher im 3GPP Standard vorgesehen.

Viele Netzbetreiber ("Operator") wollen das Feature Videotelefonie einführen und gleichzeitig bei der Rufnummernvergabe ein "single numbering scheme" verwenden. Subscriber in solchen Netzen werden in stärkerem Umfang als bisher Calls für unterschiedliche Dienste (Voice oder Video) empfangen. Mit der Erfindung wird es für den Subscriber leichter, den Call für den richtigen Dienst anzunehmen.

## Patentansprüche

1. Verfahren zur Dienstauswahl beim Rufaufbau für einen Anruf für ein Endgerät ("UE") über ein Telekommunikationsnetz ("T"), insbesondere über ein zellulares Mobilfunknetz oder Festnetz
**dadurch gekennzeichnet, dass**
wenn ein Endgerät ("UE") im Falle eines Anrufs ("Mobile Terminating Call") eine Rufaufbau- ("Setup") Nachricht ohne Kompatibilitäts- Information ("Compatibility Information", "BC") erhält,
vom Endgerät ("UE") nach Empfang der Rufaufbau- ("Setup") Nachricht und vor dem Senden einer Anrufbestätigungsnachricht ("Call Confirmed") ein Auswahlmenü ("AM") erzeugt wird, mit dem vom Benutzer ("N") des Endgerätes ("UE") eine Auswahl eines Dienstes abgefragt wird ("Video" / "Sprache"),
worauf vom Endgerät ("UE") unter Berücksichtigung der Auswahl eine Kompatibilitäts- Information ("Compatibility Information," "BC") in einer Anrufbestätigungsnachricht ("Call Confirmed") an das Telekommunikationsnetz ("T") gesendet wird.

2. Verfahren nach Anspruch 1,
**dadurch gekennzeichnet, dass**
ein auswählbarer Dienst eine Videoverbindung (Video Call) ist und dass ein weiterer auswählbarer Dienst eine Sprachverbindung (Voice Call) ist.

3. Verfahren nach einem der vorhergehenden Ansprüche,
**dadurch gekennzeichnet, dass**
die Kompatibilitäts- Information (Compatibility Information) eine "PLMN-Bearer Capability" (BC) "ISDN-Bearer Capability" (BC), "High Layer Compatibility" Information (HLC) oder "Low Layer Compatibility" Information (LLC)) umfasst.

4. Verfahren nach einem der vorhergehenden Ansprüche,
**dadurch gekennzeichnet, dass**, wenn der Benutzer keine Auswahl trifft, nach einem kurzen Zeitraum für das Kompatibilitäts-Informations- Element (Compatibility Information) (BC) ein voreingestellter Standardwert für den weiteren Rufaufbau (Call Aufbau) verwendet werden.

5. Verfahren nach einem der vorhergehenden Ansprüche,
**dadurch gekennzeichnet, dass**
beim Darstellen des Auswahlmenüs vom Endgerät ein Signal, insbesondere ein nur hierbei verwendetes akustisches Signal, insbesondere ein Klingelton erzeugt wird.

6. Verfahren nach einem der vorhergehenden Ansprüche,
**dadurch gekennzeichnet, dass**
dass die Art des akustischen Signals, insbesondere eines Klingeltons, vom Telekommunikationsnetz durch ein Informations- Element in einer vom Telekommunikationsnetz an das Endgerät gesendeten Setup Nachricht beeinflusst wird.

7. Verfahren nach einem der vorhergehenden Ansprüche,
**dadurch gekennzeichnet, dass**
die Abfrage und das Auswahlmenü im Endgerät (UE) ausschaltbar sind

8. Verfahren nach einem der vorhergehenden Ansprüche,
**dadurch gekennzeichnet, dass**
für Teilnehmer, die sehr viele Anrufe (Calls) ohne Kompatibilitäts- Information (Compatibility Information) (BC) erhalten und immer nur "Voice" als Anruf-Typ benötigen, das Endgerät (UE) so eingerichtet wird, dass immer die eine Sprachverbindung ("Voice Call") anzeigende Kompatibilitäts-Information (Compatibility Information) (Voice BC) zurückgesendet wird.

9. Verfahren nach einem der vorhergehenden Ansprüche,
**dadurch gekennzeichnet, dass**
wenn ein Endgerät- Nutzer hauptsächlich Video-Anrufe ("Videocalls") erwartet oder bekommt als Standardwert "Video Call" im Endgerät eingerichtet wird und dieser bei Nicht-Eingabe bei der Abfrage als Kompatibilitäts- Information ("Compatibility Information") an das Telekommunikationsnetz gesendet wird.

10. Verfahren nach einem der vorhergehenden Ansprüche,
**dadurch gekennzeichnet, dass**
wenn das Netz mit der Setup Nachricht anstelle einer "PLMN-BC"- Information eine "Backup Bearer Capability"- Information gemäß 3GPP TS 24.008 mit- sendet, das Endgerät (UE) die darin enthaltene Information dahingehend berücksichtigt, dass Dienste, die damit nicht vereinbar sind, dem Benutzer des Endgerätes im Auswahlmenü gar nicht mehr angeboten werden.

11. Verfahren nach einem der vorhergehenden Ansprüche,
**dadurch gekennzeichnet, dass**
die Kompatibilitäts- Information ("Compatibility Information") (PLMN-BC) in der ersten Anrufbestätigungsnachricht ("Call Confirmed") enthalten ist, die das Endgerät (UE) an das Telekommunikationsnetz sendet.

12. Verfahren nach einem der vorhergehenden Ansprüche,
**dadurch gekennzeichnet, dass**
das Endgerät (UE) mit der ersten Anrufbestätigungsnachricht ("Call Confirmed") noch keine Kompatibilitäts- Information ("Compatibility Information") (PLMN-BC) an das Telekommunikationsnetz sendet, sondern diese erste Anrufbestätigungsnachricht ("Call Confirmed") ohne Kompatibilitäts- Information ("Compatibility Information") sendet und gleich anschließend dem angerufenen Teilnehmer ein Menü zur Auswahl des Dienstes angeboten wird,
wobei nach der Auswahl des Dienstes das entsprechende "BC"-Element vom Endgerät ("UE") mit einer weiteren Signalisierungsnachricht ("Alert" oder "Connect" Nachricht) an eine Vermittlungseinrichtung (MSC/VLR) des Telekommunikationsnetzes gesendet wird.

13. Verfahren nach einem der vorhergehenden Ansprüche,
**dadurch gekennzeichnet, dass**
für bestimmte Dienste, insbesondere für eine "Analoge Video Verbindung mit Rückfallmöglichkeit zu einer Sprachverbindung " das Endgerät (UE) zwei Kompatibilitäts- InformationsElemente (Compatibility Information) ("PLMN-BC" Informations-Elemente) mit einer Verbindungsnachricht ("Connect"-Nachricht) mit- sendet.

14. Endgerät zur Durchführung des Verfahrens nach einem der vorhergehenden Patentansprüche.
